# EUROPEAN PATENT APPLICATION

(11) **EP 3 048 542 A1**
(43) Date of publication of application: **27.07.2016**
(21) Application number: 15305070.3
(22) Date of filing: 23.01.2015
(51) Int. Cl.: G06F 17/30, G06Q 10/10

(54) **Elaboration of a graphical representation in a module of a web page**

(71) Applicant: Hewlett Packard Enterprise Development LP, Houston, TX 77070 (US)
(72) Inventor: Picard, Jean-Charles, 06254 MOUGINS Cedex (FR); Lambert, Marc, 06254 Mougins Cedex (FR); Riviere, Remy, 06254 Mougins Cedex (FR)
(74) Representative: Underwood, Nicolas Patrick

(57) **Abstract**

A method is described in which a graphical representation is elaborated in a module of a page, wherein the data to be represented has a type which is read in received instructions before requesting the data; raw data is received before being prepared by sorting the data having said type; the prepared data is formatted according to the type of graphical representation before being represented.

## Description

### BACKGROUND

Some computer systems receive large quantities of data in the form of tables. In order to generate a graphical representation of the data such as a pie chart or a bar chart, a user is required to intervene in order to elaborate the graphical representation.

Spreadsheet applications require numerous manipulations before a graphical representation is obtained.

### BRIEF DESCRIPTION OF THE DRAWINGS

The following detailed description references the drawings, wherein:
FIG. 1 is a block diagram of an example of a system.
FIG. 2 is a diagram of the different elements of a webpage according to an example.
FIG. 3 is a diagram of the different steps of a method according to an example.
FIG. 4 is a diagram of the different steps of a method according to an example.
FIG. 5 is an example of a webpage comprising widgets according to an example.

### DETAILED DESCRIPTION

The following detailed description refers to the accompanying drawings. Wherever possible, the same reference numbers are used in the drawings and the following description to refer to the same or similar parts. While several examples are described in this document, modifications, adaptations, and other implementations are possible. Accordingly, the following detailed description does not limit the disclosed examples. Instead, the proper scope of the disclosed examples may be defined by the appended claims.

Webpages may be used to request and display different kinds of data. An example of webpage is a dashboard of an operation support system (OSS). A dashboard may provide a user with data relating to the past or current state of a system.

For example, a system to be observed through a dashboard may be a server for which a user may want to observe how other users connect to this server.

The data that a user may want to observe in a dashboard may be provided in the form of a spreadsheet, from which various graphical representations may be obtained. Graphical representations may include bar charts, line charts, area charts, pie charts, heat charts, spline charts, and other types of charts. These graphical representations may be elaborated at least partially in a widget of a webpage.

Displaying automatically the data in the widget in a manner such that the graphical representation corresponds to what the user wishes to see displayed may pose significant technical challenges. For example, determining what a user wants to be displayed as a horizontal axis (or X axis) in a bi-dimensional chart may pose technical difficulties or it may require intervention of a user.

One technical difficulty appears in the possibly large number of types of data that may have to be treated, and the complexity linked with determining in the data which type of data should be associated with which axis of the graphical representation.

For example, a system may comprise an operation support system (OSS) such as a framework. An OSS may include a Customer Experience Assurance (CEA) graphical user interface and an OSS console graphical user interface (i.e. a webpage).The webpage of the OSS console graphical user interface may comprise a module wherein a graphical representation is automatically elaborated.

A CEA graphical user interface may communicate with a server configured to collect information based on different sources and storing data. An OSS console graphical user interface may also communicate using its own server.

The server or a CEA graphical user interface may communicate with a number of probes for gathering information relating to the connection of terminals to this server through various protocols.

For example, a terminal may communicate with the server of a CEA graphical user interface using a 3G network (for example UTRAN: UMTS Terrestrial Radio Access Network), another terminal may communicate with the server using an LTE network (for example E-UTRAN: evolved UMTS Terrestrial Radio Access Network). Various networks may also be used to communicate with this server: Evolved Packet Core network (EPC). Another network may be a GPRS core network, and another may be a Packet Data network.

Data relating to the connection of the terminals and the use of the networks may be observed and stored in the server of a CEA graphical user interface. This data is intended to be represented in a web page in a manner that facilitates the reading by a user. The data may preferably comprise data having several types, for example dimensions that describe the data, or metrics such as Key Performance Indicators (KPI). An example of KPI may be quality of service metrics. An example of dimensions may be a brand of terminal, or the communication network used by the terminal.

Also, an OSS console graphical user interface may communicate with its server in order to elaborate a graphical representation. This elaboration is done automatically by the OSS console graphical user interface and by its modules.

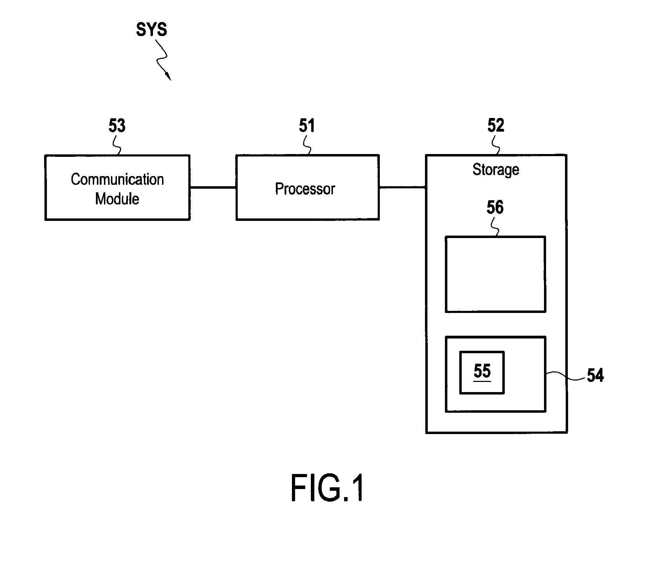

Referring now to the drawings, a server and an OSS console graphical interface may be implemented as a system SYS described in reference to FIG. 1.

The system SYS of FIG. 1 comprises a processor 51, a storage 52, and a communication module 53. The processor 51 may be operated by an operating system (which may be a Windows operating system or a Linux operating system, or other similar types of operating systems) to realize the basic machine parameters of the system SYS. Communications with a network, for example the Internet, are implemented through the communication module 53 which may be a modem. The storage 52 comprises various sets of instructions for executing software with the processor 51, which may also use the communication module 53. The storage 52 comprises a set of instructions or code 56 that renders a webpage, and it also comprises a subset of instructions 55 for rendering a module, or widget, in the webpage. The widget may display a graphical representation. It should be noted that the system SYS may also comprise a display module for displaying the webpage, for example a screen.

The storage further comprises a set of executable instructions 56 to: receive instructions on data to be represented in the graphical representation, request data according to said instructions using said communication module, receive raw data using said communication module, prepare the raw data having been received by organizing the data having said type of data in the raw data, format the prepared data according to the type of said graphical representation, and represent the formatted data as a graphical representation in said module of the web page. This set of executable instructions 56 induces cooperation of the webpage, the processor, the storage, and the communication module.

It should be noted that the storage 52 may be any electronic, magnetic, optical, or other physical storage device that stores executable instructions. The storage 52 may then be a non-transitory machine-readable storage medium, for example a Random Access Memory (RAM), an Electrically-Erasable Programmable Read-Only Memory (EEPROM), a storage drive, an optical disc, and the like. The storage 52, or non-transitory machine readable storage medium, is encoded with instructions 56 executable by the processor 51 for elaborating a graphical representation. Therefore, the instructions 56 may comprise:
- instructions to receive instructions on data to be represented in the graphical representation,
- instructions to request data according to said instructions using said communication module,
- instructions to receive raw data using said communication module,
- instructions to prepare the raw data having been received by organizing the data having said type of data in the raw data,
- instructions to format the prepared data according to the type of said graphical representation,
- instructions to represent the formatted data as a graphical representation in said module of the web page.

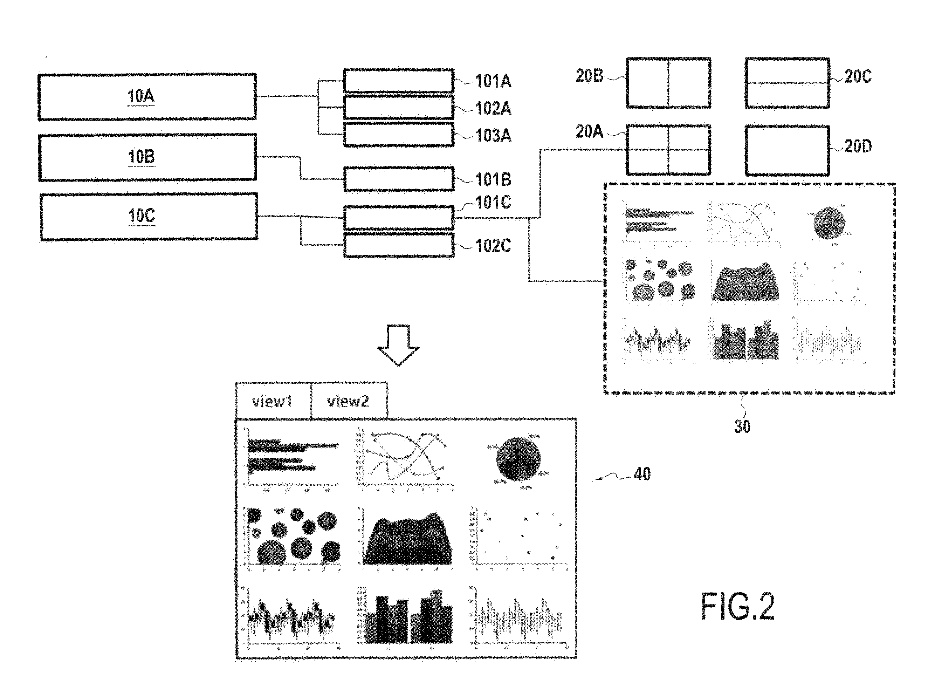

FIG. 2 is a diagram of the different elements of a webpage which may be the OSS console graphical user interface 3 described in reference to figure 1. The webpage may provide several different workspaces such as workspace 10A, 10B and 10C. Workspace 10A may provide through a graphical user interface different views referenced 101A, 102A and 103A on figure 2. Workspace 10B may provide through a graphical user interface one view referenced 101B on figure 2. Workspace 10C may provide through a graphical user interface two views 101C and 102C.

In the example of figure 2, the view 101C is elaborated by having a user choose a layout among layouts 20A, 20B, 20C or 20D, which correspond to the manner in which a plurality of widgets may be displayed in the webpage, i.e. one widget per view, two widgets horizontally or vertically separated or several widgets separated by horizontal and vertical lines.

The view 101C is also elaborated by selecting widgets among a group of widgets 30. The widgets are each associated with a type of graphical representation such as bar charts, line charts, area charts, pie charts, heat charts, spline charts, or other types of charts.

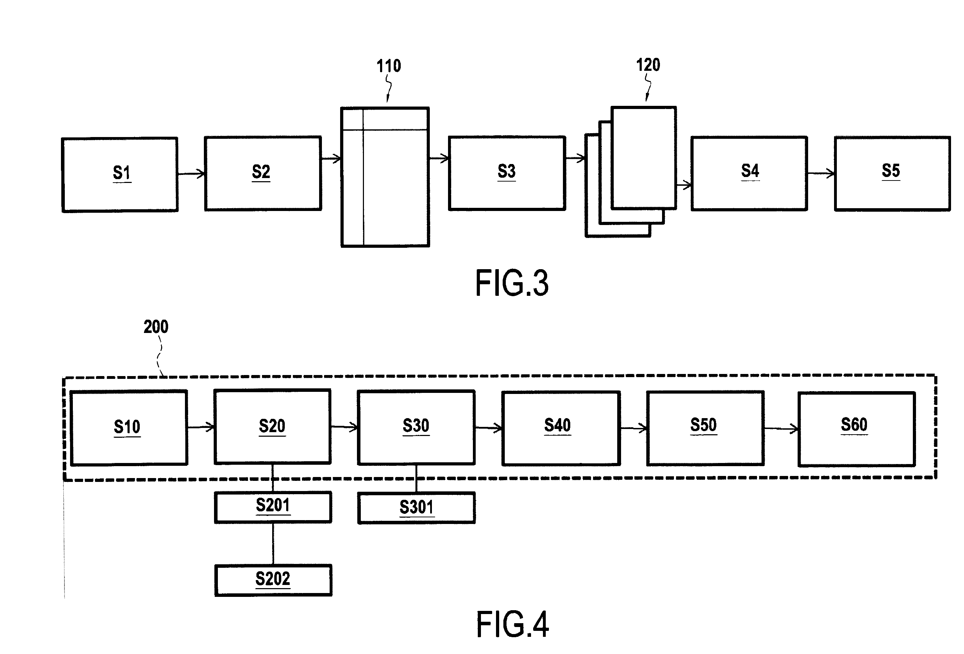

A webpage 40 is then obtained, comprising a plurality of widgets. The widgets are each elaborated in a manner that will be described in reference to figures 3 and 4. The user may also switch between the available views of the webpage.

FIG. 3 is a diagram of the different steps of a method for elaborating a graphical representation in a module of a web page, the module being a widget. It should be noted that the following steps may be implemented in a computer, for example a server having a processor.

In a first step S1, instructions are received in a widget through a graphical user interface. The instructions include a type of data to be represented, or several types of data, for example a dimension, a metric, or temporal data.

It should be noted that temporal data may comprise a time range (specifying a starting instant and a finishing instant) and a granularity (the rate of collection of data, for example 15 minutes, an hour, a day).

Following the reception of instructions, a request is made in step S2. This request is an html request elaborated according to the instructions of step S1.

By way of example, instructions may be received with the following types of data: Brand (brand of terminal) and Technology (type of communication network) as dimensions, and metrics related to Domain Name Servers.

An example of request may then be the following http request: http://localhost:9000/V1.0/domains/cea/packages/MBBQOE_Trial/kpis/DNS_req_count,DD N_failure_ratio,failed_DNS_req_count/dims/BRAND,TECHNOLOGY?begin=1410789601410 &end=1410796800000&granularity=900&top=3&batchsize=100000

It should be noted that this request is also directed to temporal data, by specifying a starting time, a stopping time, and a granularity.

Another example of request, directed to receiving data on types of DNS errors (the dimension) and the counting of those errors (the metrics) may be: http://localhost:9000/V1.0/domains/cea/packages/MBBQOE_Trial/kpis/failed_DNS_req_co unt/dims/ERROR_NAME?begin=1410775200000&end=1411228800000&batchsize=10000 0

Following the request, raw data 110 is then received in the form of a spreadsheet. By way of example, the first above example may lead to the following data being received:

```
 {
 "headers": ["EVENT_TIMESTAMP", "BRAND", "TECHNOLOGY", "DNS_req_count",
 "DNS_failure_ratio", "failed_DNS_req_count", "_RN_"],
 "values": [
 [1410789600000, "Motorola", "3G", 75875, 1.79901153212521, 1365, 1],
 [1410789600000, "Huawei", "3G", 47157, 0.812180588247768, 383, 2],
 [1410789600000, "_UNKNOWN_", "3G", 39841, 1.20980899073818, 482, 3],
 [1410790500000, "Motorola", "3G", 78279, 1.8919505870029, 1481, 1],
 [1410790500000, "Huawei", "3G", 47793, 0.864143284581424, 413, 2],
 [1410790500000, "_UNKNOWN_", "3G", 40072, 1.15791575164704, 464, 3],
 [1410791400000, "Motorola", "3G", 80555, 1.99366892185463, 1606, 1],
 [1410791400000, "Huawei", "3G", 49337, 0.865476214605671, 427, 2],
 [1410791400000, "_UNKNOWN_", "3G", 41705, 1.12696319386165, 470, 3],
 [1410792300000, "Motorola", "3G", 89767, 2.02301513919369, 1816, 1],
 [1410792300000, "Huawei", "3G", 53810, 0.685746143839435, 369, 2],
 [1410792300000, "_UNKNOWN_", "3G", 44952, 1.25912084000712, 566, 3],
 [1410793200000, "Motorola", "3G", 80712, 1.99102983447319, 1607, 1],
 [1410793200000, "Huawei", "3G", 49599, 0.614931752656304, 305, 2],
 [1410793200000, "_UNKNOWN_", "3G", 41403, 1.16658213172958, 483, 3],
 [1410794100000, "Motorola", "3G", 77721, 1.91325381814439, 1487, 1],
 [1410794100000, "Huawei", "3G", 48710, 0.59125436255389, 288, 2],
 [1410794100000, "_UNKNOWN_", "3G", 40534, 1.22613114915873, 497, 3],
 [1410795000000, "Motorola", "3G", 78505, 1.88650404432839, 1481, 1],
 [1410795000000, "Huawei", "3G", 49431, 0.750541158382392, 371, 2],
 [1410795000000, "_UNKNOWN_", "3G", 42590, 1.32190655083353, 563, 3],
 [1410795900000, "Motorola", "3G", 78830, 2.02334136749968, 1595, 1],
 [1410795900000, "Huawei", "3G", 49729, 0.683705684811679, 340, 2],
 [1410795900000, "_UNKNOWN_", "3G", 42015, 1.20433178626681, 506, 3]
 ],
 "status": "OK",
 "statusInfo": null,
 "offset": null,
 "nbVals": 24,
 "totalCount": null,
 "timeColumn": "EVENT_TIMESTAMP",
 "rankColumn": "_RN_"
 }
```

As can be seen in this raw data, information on the brand of terminals is received, as well as information on the communication network (for example 3G).

The second example of request may lead to the following data being received:

```
{
 "headers": ["ERROR_NAME", "failed_DNS_req_count"],
 "values": [
 ["UNKNOWN 15", 3],
 ["UNKNOWN11", 2],
 ["OK", 0],
 ["UNKNOWN 12", 2],
 ["NOTIMP", 226],
 ["UNKNOWN 13", 3],
 ["NOTZONE", 5],
 ["REFUSED", 43895],
 ["YXRRSET", 7],
 ["FORMERR", 20],
 ["YXDOMAIN", 3],
 ["UNKNOWN 14", 2],
 ["NOTAUTH", 7],
 ["SERVFAIL", 1040126],
 ["NXDOMAIN", 2351972]
 ],
 "status": "OK",
 "statusInfo": null,
 "offset": null,
 "nbVals": 15,
 "totalCount": null
 }
```

In step S3, the raw data 110 is prepared by sorting the data having the type of data mentioned in the instructions.

This step S3 comprises grouping the data having the same type, through a group-by request. In the above examples, it is possible to group by brand of terminal. In this step S3, the type may be a common dimension, and this grouping may be performed for any dimension. This grouping may notably be performed according to the instructions received in step S1. After this step series may be delivered for each dimension having been grouped.

It should also be noted that the wording "same type", in the present application, is directed to data having for example a same dimension, for example the same technology in the above example, and it is not directed to data having the same type in a programming language.

This step also determines where the dimensions are and where the metrics are and if temporal data is present.

If temporal data is included in the raw data, then this temporal data may be assigned to a horizontal axis of any graphical representation having such an horizontal axis.

This step also sorts dimensions from the associated metrics.

This step also comprises an aggregation of at least two types of data, for example when the data comprises several dimensions. In one of the above examples, it is possible to aggregate the following dimensions: Brand and Technology. This aggregation may also be realized for any possible combination between the different types of data.

Prepared data 120 is then obtained. This prepared data is prepared regardless of the graphical representation to be used. This raw data may notably be stored in order to be reused by another widget: this allows to limiting the amount of time-consuming processing.

The raw data obtained for the request directed to DNS errors may be in the form of a list of tables as follows:

```
 {
 "categories": {
 "categories": [
 {
 "compositeKey": [
 {
 "id": "ERROR_NAME",
 "name": "Error Name",
 "metadata": {
 ],
 "domain": "cea",
 "package": "MBBQOE_Trial"
 },
 "value": "FORMERR",
 "type": "value",
 "isOptional": false
 }
 ]
 },
 ...a list of categories here ...
 "categoriesFormat": [
 {
 "id": "ERROR_NAME",
 "name": "Error Name",
 "metadata": {
 },
 "cardinality": 15,
 "valuesCount": {
 "UNKNOWN15": 1,
 "UNKNOWN11": 1,
 "OK":1,
 "FORMERR": 1,
 "YXDOMAIN": 1,
 "UNKNOWN14": 1,
 "NOTAUTH": 1,
 "SERVFAIL": 1,
 "NXDOMAIN": 1,
 "YXRRSET': 1,
 "REFUSED": 1,
 "UNKNOWN 12": 1,
 "NOTIMP": 1,
 "UNKNOWN13": 1,
 "NOTZONE": 1
 }
 }
 ],
 "series": [
 {
 "id": "failed-DNS-req_count",
 "name": "failed_DNS_req_count",
 "compositeName": {
 "compositeKey": [
 {
 "id": "failed_DNS_req_count",
 "name": "failed_DNS_req_count",
 "value": null,
 "type": "name"
 }
 ]
 },
 "dataFormat": [
 {
 "id": "failed_DNS_req_count",
 "name": "failed_DNS_req_count",
 "Idx": 1
 }
 ],
 "data": [
 20,
 7,
 226,
 5,
 2351972,
 0,
 43895,
 1040126,
 2,
 2,
 3,
 2,
 3,
 3,
 7
 ]
 }
 ],
 "title": "failed_DNS_req_count per Error Name"
 }
```

It should be noted that this prepared data comprises no reference to a graphical representation or a widget. This prepared data may thus be represented on any widget, providing that the prepared data comprises enough data to be represented on widgets requiring a sufficient amount of data (for example a horizontal axis, a vertical axis, a depth axis...).

The prepared data is formatted in step S4, wherein the prepared data is formatted according to the type of graphical representation associated with the widget and also according to an Application Programmable Interface (API) in charge of representing data, this API may be a Java API.

It should be noted that a same formatting may be used for different types of graphical representations. By way of example, line charts, spline charts, column charts, area charts, area spline charts and bar charts may use a same formatting, and this formatting may use temporal data as a horizontal axis. If several dimensions are available, the formatting may elaborate several series, one for each dimension, with the temporal data (if present) as horizontal axis, and the metrics to be plotted.

Building the series during the formatting may be realized by using templates that are filled with the data.

This may also be realized by using a predefined set of rules. An example of set of rules may be to request a specific number of series of dimensions with or without temporal data, or to request a plurality of series of dimensions each having a specific number of metrics. These rules may be re-used in order to form a template.

This allows easier development of new widgets, which may essentially be developed according to the template in order to make sure that the new widget will display the data as expected without requiring new data processing steps.

Pie charts, funnel charts and pyramid charts may use a same formatting because data formatted for any one of these charts may be re-used for another one (they all are able to display a single list of metrics). Other types of charts may require different formatting. For these charts, series may only comprise a list of metrics.

Other types of formatting may be carried out for different graphical representations.

In step S5, the graphical representation is elaborated, for example using a Java application programming interface configured for the desired type of graphical representation.

FIG. 4 is another diagram of a method for elaborating a graphical representation.

On this figure, the reference 200 relates to the widget (a module of a webpage). Hence, this figure highlights which module of a webpage performs the steps of the method. It should be noted that the following steps may be implemented in a computer, for example a server having a processor.

In Step S10, instructions are received in the widget.

In step S20, a request is elaborated by the widget based on the instructions. In steps S201 an http request elaborated in step S20 is used by a module external to the widget that may be used by different widgets to perform actions such as making http requests. The use of a module external to the widget used for displaying the graphical representation allows simplifying the architecture of this widget.

Also, in step S202, a module specifying temporal parameters, which may be external to the widget in this example, provides these parameters to the widget to specify the type of temporal data that are needed in the graphical representation. The use of an external widget allows the user to only manipulate one graphical user interface to specify the time range and the granularity that is desired for different widgets.

In step S30, the data is prepared and formatted (steps S3 and S4 of FIG. 3). The widget may request that an external module performs this preparation and formatting in step S301. This allows using or implementing new widgets without having to deal with data processing and data formatting.

In step S40, a graphical representation is elaborated.

In step S50, the data used in the graphical representation is stored.

Step 60 is directed to graphical representations that use temporal data, and in this step, the graphical representation is updated by requesting additional data comprising temporal data, for example by carrying out the steps S10 to S40 and by taking into account the previous data stored in step 50.

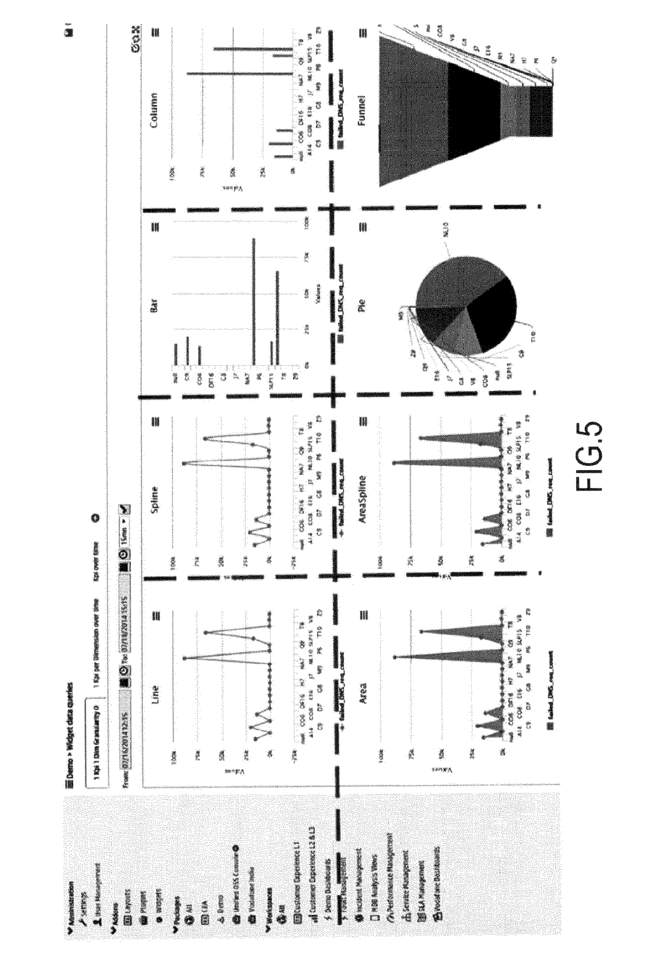

An example of webpage obtained is represented on FIG. 5. On this figure, temporal parameters are filled in a widget common to all widget, above all the graphical representations. Several views in the form of tabs may be shown in the webpage. In this illustrated example, the same data is represented in each widget.

It should be noted that the different widgets may all use the same prepared data, for example the data prepared in step S3 described in reference to FIG. 3.

According to an embodiment, there is proposed a simple method, wherein the processing steps are made by a single module external to the widgets for elaborating a graphical representation. The complexity of manipulating the data is thus only implemented in one module. Also, this simplifies the programming steps and leads to faster implementation.

According to an embodiment of the invention, there is provided a method which allows preparing the data regardless of the type of graphical representation that a user wishes to display.

## Claims

1. Method for elaborating a graphical representation in a module of a web page, comprising the following steps:
a - receiving instructions including a type of data to be represented in the graphical representation,
b - requesting data according to said instructions,
c - receiving raw data,
d - preparing the raw data of step c by sorting the data having said type of data in the raw data,
e - formatting the prepared data of step d according to the type of said graphical representation,
f - representing the formatted data of step e as a graphical representation in said module of a web page.

2. Method according to claim 1, wherein step d further comprises grouping data having said type of data.

3. Method according to claim 1, wherein step d further comprises aggregating data of at least two types of data.

4. Method according to claim 1, wherein step d further comprises determining if the raw data comprises temporal data, and assigning a horizontal axis of the graphical representation to the temporal data.

5. Method according to claim 4, wherein the raw data comprises temporal data, the method further comprising updating the graphical representation by requesting additional data comprising temporal data.

6. Method according to claim 1, wherein the raw data comprises dimensions having said type of data and metrics.

7. Method according to claim 1, wherein the module is a widget of said webpage.

8. Method according to claim 1, wherein said module requests the data according to said instructions using a HTTP request.

9. Method according to claim 1, wherein the webpage comprises a supplementary module for representing a graphical representation, the method further comprising formatting the prepared data according to a type of graphical representation corresponding to the supplementary module.

10. Method according to claim 1, wherein steps a, b, c and f are implemented at least partially by said module of the webpage, and steps d and e are implemented by another module of the webpage.

11. Method according to claim 1, wherein the webpage is a dashboard of an operation support system.

12. A computer system for elaborating a graphical representation in a module of a webpage having a module wherein a graphical representation is displayed comprising:
a processor,
a storage,
a communication module,
the storage comprising a set of executable instructions to:
receive instructions on data to be represented in the graphical representation,
request data according to said instructions using said communication module,
receive raw data using said communication module,
prepare the raw data having been received by organizing the data having said type of data in the raw data,
format the prepared data according to the type of said graphical representation,
represent the formatted data as a graphical representation in said module of the web page.

13. A non-transitory machine-readable storage medium encoded with instructions executable by a processor for elaborating a graphical representation in a module of a web page, the machine-readable storage medium comprising:
instructions to receive instructions on data to be represented in the graphical representation,
instructions to request data according to said instructions using said communication module,
instructions to receive raw data using said communication module,
instructions to prepare the raw data having been received by organizing the data having said type of data in the raw data,
instructions to format the prepared data according to the type of said graphical representation,
instructions to represent the formatted data as a graphical representation in said module of the web page.

14. A non-transitory machine-readable storage medium in accordance with claim 13, wherein the instructions to prepare the raw data further comprise instructions to group data having said type of data.

15. A non-transitory machine-readable storage medium in accordance with claim 13, wherein the instructions to prepare the raw data further comprise aggregating data of at least two types of data.
